# EUROPEAN PATENT SPECIFICATION

(11) **EP 1 532 074 B1**
(45) Date of publication and mention of the grant of the patent: **26.04.2023**
(21) Application number: 03790909.0
(22) Date of filing: 19.08.2003
(51) Int. Cl.: C01B 39/06

(54) **PROCESS FOR THE PREPARATION OF DOPED PENTASIL-TYPE ZEOLITES USING A DOPED REACTANT**
VERFAHREN ZUR HERSTELLUNG VON DOTIERTEN ZEOLITHEN DES PENTASIL-TYPS MITTELS DOTIERTEM REAKTANT
PROCESSUS DE PREPARATION DE ZEOLITES DE TYPE PENSATILE DOPES AU MOYEN D'UN REACTIF DOPE

(30) Priority: 28.08.2002 US 406490 P; 24.10.2002 EP 02079431
(43) Date of publication of application: 25.05.2005
(73) Proprietor: Albemarle Netherlands B.V., 3818 LH Amersfoort (NL)
(72) Inventor: BRADY, Mike, Studio City, CA 91604 (US); LAHEIJ, Erik, Jeroen, NL-1181 SW Amstelveen (NL); O'CONNOR, Paul, NL-3871 KM Hoevelaken (NL); STAMIRES, Dennis, Newport Beach, CA 92660 (US)
(74) Representative: Hoyng Rokh Monegier B.V.
(86) International application number: PCT/EP2003/009186
(87) International publication number: WO 2004/020335

(56) References cited:
- EP-A- 0 814 058
- EP-A1- 1 094 033
- WO-A-92/12096
- FR-A- 2 730 723
- OVEJERO, G. ET AL: "Bifunctional properties of Al-TS-1 synthesized by wetness impregnation of amorphous Al2O3-TiO2-SiO2 solids prepared by the sol-gel method" CATALYSIS LETTERS (1996), 41(1,2), 69-78 , 1996, XP002261381
- GIANNETTO G ET AL: "Synthesis and characterization of [Cr,Al]-ZSM-5 zeolites" ZEOLITES, ELSEVIER SCIENCE PUBLISHING, US, vol. 19, no. 2-3, 9 August 1997 (1997-08-09), pages 169-174, XP004091572 ISSN: 0144-2449

## Description

The present invention relates to the preparation of metal-doped pentasil-type zeolites using a metal-doped reactant.

US 6,346,224 discloses the preparation of metal-doped aluminosilicates with MFI topology by mixing a sodium silicate solution with an acidic metal- containing solution (e.g. an Fe-, Ni-, Zn-, or Cr-containing solution) to form a silicon-metal solution, and mixing this silicon-metal-containing solution with an aluminium-containing solution to provide a gel mixture.

This gel is crystallised under hydrothermal conditions to provide a metalloaluminosilicate having an aluminosilicate framework with the metal incorporated therein.

As the aluminium-containing mixture is basic and the silicon-metal-containing mixture is acidic, it will be clear that upon addition of the basic aluminium,. containing solution to the acidic silicon-metal-containing solution, the metal can precipitate as hydroxide. This has a negative effect on the homogeneity of the metal distribution in the resulting zeolite.

EP1094033 A1 discloses a method for preparing a metalloaluminosilicate including the steps of providing a solution containing a silica source, providing a solution containing an alumina source, providing an aqueous acid solution containing a metal other than silicon or aluminum, mixing the silica source solution with the aqueous acid solution so as to form a silica source-metal containing mixture;
mixing the silica source-metal containing mixture with the alumina source solution so as to provide a gel mixture and hydrothermally crystallizing the gel mixture so as to provide a metalloaluminosilicate material having an aluminosilicate framework and having the metal incorporated into the aluminosilicate framework.

The present invention offers a process for the preparation of metal-doped pentasil-type zeolites where the risk of precipitation of the metal dopant as a separate phase is minimised.

This process involves the following steps:
a) preparing an aqueous precursor mixture comprising a silicon source and an aluminium source, at least one of these sources being doped with a rare earth metal dopant or a transition metal dopant of Groups Vb-VIIIb, Ib, or IIb of the Periodic System, and wherein the aqueous precursor mixture preferably comprises a seeding material,
b) thermally treating the precursor mixture to form a metal-doped pentasil-type zeolite,

wherein the pentasil-type zeolite is ZSM-5 or ZSM-11,
wherein the metal-doped pentasil-type zeolite has a SiO₂/Al₂O₃ ratio of 25-90 and contains 0.1-10 wt%, of dopant calculated as oxide and based on the dry weight of metal-doped pentasil-type zeolite,
wherein the metal dopant has been incorporated into the silicon and/or the aluminium source before the above process is performed, by preparing the silicon and/or the aluminium source in the presence of the desired dopant or by impregnation or ion exchange of the silicon and/or the aluminium source with the metal dopant, whereby the metal compound is in the silicon or the aluminium source as a metal-doped silicon or aluminium source and not freely present in the aqueous precursor mixture,
wherein the metal-doped silicon source is selected from the group consisting of metal-doped sodium (meta)silicate or water glass, metal-doped stabilised silica sols, metal-doped silica gels, metal-doped polysilicic acid, metal-doped tetra ethylortho silicate, metal-doped precipitated silicas, metal-doped SiAl cogels, and mixtures thereof and
wherein the metal-doped aluminium source is selected from the group consisting of metal-doped aluminium trihydrate (AI(OH)3), metal-doped thermally treated aluminium trihydrate, metal-doped (pseudo)boehmite, metal-doped aluminium chlorohydrol, metal-doped aluminium nitrohydrol, metal-doped SiAl cogels, and mixtures thereof.

In this process, the silicon source and/or the aluminium source are metal-doped. This means that the desired metal compound (the dopant) has been incorporated into the silicon and/or the aluminium source before the above process is performed.

Metal-doped silicon and/or aluminium sources can be prepared by, e.g., preparing the silicon and/or the aluminium source in the presence of the desired dopant. This results in a silicon and/or an aluminium source wherein the dopant is homogeneously dispersed. Another way of doping is impregnation or ionexchange of the silicon and/or the aluminium source with the dopant.

Hence, physical mixtures of a silicon or an aluminium source with the desired metal compound in solution or suspension - as in US 6,346,224 - are not metal-doped silicon or aluminium sources according to the above definition. It can easily be imagined that when the metal compound is introduced into an aqueous mixture via the silicon or the aluminium source (i.e.: as a metal-doped silicon or aluminium source), it is not freely present in the mixture and the risk of precipitation of the metal as a separate phase is minimised.

The dopant is a rare earth metal (e.g. Ce, La) or a transition metal of Groups Vb-VIIIb, Ib, or IIb of the Periodic System. Groups Vb through VIIIb are the groups represented by vanadium through nickel; Groups lb and IIb are represented by Cu and Zn, respectively.

Both rare earth metals and the selected transition metals are frequently present in catalysts for hydrocarbon conversion, purification, or synthesis. For instance, Ce and V are known to improve the capability of FCC catalysts and catalyst additives to remove SOx and/or NOx compounds from regenerator gases, while the presence of V and Zn in FCC catalysts or additives improves the removal of S-compounds from the gasoline and diesel fractions of FCC. In hydroprocessing catalysts Co, Mo, and W are generally applied metals, while the alkylation of hydrocarbons over solid acid catalysts applies noble metals such as Pt and Pd. In hydrocarbon synthesis, e.g. Fischer-Tropsch synthesis, Fe, Co, and Ru are desired metals. Ni and Cu are frequently used for the hydrogenation of hydrocarbons.

Examples of transition metals suitable as dopants in the process of the present invention are Mn, Fe, Cu, Ni, Zn, Mo, C, W, V, Pt, and Pd.

The dopant can be incorporated into the silicon or the aluminium source as, e.g., its oxide, hydroxide, carbonate, hydroxycarbonate, chloride, nitrate, sulfate, or phosphate.

The first step of the process according to the invention involves the preparation of an aqueous precursor mixture comprising a metal-doped silicon source and/or a metal-doped aluminium source.

Suitable aluminium sources include aluminium salts, such as Al₂(SO₄)₃, AlCl₃, AlPO₄, Al₂(HPO₄)₃, and Al(H₂PO₄)₃, and water-insoluble aluminium compounds, e.g., aluminium trihydrate (Al(OH)₃) such as gibbsite and bauxite ore concentrate (BOC), thermally treated aluminium trihydrate such as flashcalcined aluminium trihydrate, (pseudo)boehmite, aluminium chlorohydrol, aluminium nitrohydrol, Si-Al cogels, and mixtures thereof. Also mixtures of one or more of these aluminium sources can be used.

It will be clear that aluminium salts cannot be doped. Hence, the term "doped aluminium source" inherently refers to a metal-doped water-insoluble aluminium source.

Doped (pseudo)boehmite, for instance, can be prepared by hydrolysis of aluminium alkoxide in the presence of the dopant, hydrolysis and precipitation of aluminium salts in the presence of the dopant, or by aging a slurry of (thermally treated) aluminium trihydrate, amorphous gel alumina, or less crystalline (pseudo)boehmite in the presence of the dopant. For more information concerning the preparation of metal-doped (pseudo)boehmite reference is made to International Patent Application Nos. WO 01/12551, WO 01/12552, and WO 01/12554.

Suitable silicon sources include sodium silicate, sodium meta-silicate, stabilised silica sols, silica gels, polysilicic acid, tetra ethylortho silicate, precipitated silicas, Si-Al cogels, and mixtures thereof.

Doped silica sol, for instance, can be obtained by preparing a silica sol from water glass and acid (e.g. sulfuric acid), and exchanging the sodium ions with the desired dopant. Alternatively, water glass, acid (e.g. sulfuric acid), and dopant are co-precipitated to form a metal-doped silica sol.

It is also possible to use a metal-doped Si-Al cogel as both the aluminium and the silicon source.

The amount of aluminium and silicon source present in the precursor mixture depends on the desired SAR of the resulting doped pentasil-type zeolite.

Preferably, the precursor mixture comprises a seeding material, such as a seed or template. Suitable seeding materials include faujasite-type seeds (zeolite X or Y), pentasil-type seeds (e.g. ZSM-5 seeds or zeolite beta seeds), amorphous seeds (e.g. amorphous Si-Al cogel), clays (e.g. bentonite, kaolin), milled zeolites with crystallites too small to be detected by X-ray diffraction techniques,
and sols or gels containing an organic directing template like tetrapropyl ammonium hydroxide (TPAOH) or tetrapropyl ammonium bromide (TPABr). An example of such a template-containing sol is a Si-AI sol containing 0.1-10 wt% of tetrapropyl ammonium bromide.

If desired, a doped seeding material is used. Suitable dopants for seeding materials are the dopants listed above as suitable for the doped aluminium source and/or the doped silicon source.

The optional dopant(s) present in the seeding material and/or the template and the dopant in the metal-doped aluminium source and/or the metal-doped silicon source may be the same or different.

Preferably, the precursor mixture comprises 1-10 wt% of seeding material, based on the total solids content. It is also possible to use more than one type of seeding material.

If so desired, several other compounds may be added to the precursor mixture, such as metal (hydroxides, sols, gels, pore regulating agents (sugars, surfactants), clays, metal salts, acids, bases, etc.

Furthermore, it is possible to mill the precursor mixture.

The precursor mixture can be shaped to form shaped bodies. Suitable shaping methods include spray-drying, pelletising, extrusion (optionally combined with kneading), beading, or any other conventional shaping method used in the catalyst and absorbent fields or combinations thereof. The amount of liquid present in the precursor mixture should be adapted to the specific shaping step to be conducted. It might be advisable to partially remove the liquid used in the precursor mixture and/or add an additional or another liquid, and/or to change the pH of the precursor mixture to make the mixture gellable and thus suitable for shaping. Additives commonly used in the different shaping methods, e.g. extrusion additives, may be added to the precursor mixture used for shaping.

The second step of the process involves thermal treatment of the precursor mixture. This thermal treatment is preferably performed at temperatures ranging from 130 to 200°C, preferably 150-180°C, for 3-60 hrs. During this step, the metal-doped pentasil-zeolite is formed by crystallisation.

The thermal treatment can be conducted in one or a series of at least two reaction vessels. If more than one such vessel is used, the process is preferably conducted in a continuous mode. Using more than one reaction vessel further allows the preparation of the aqueous precursor mixture either by adding all ingredients to the first vessel or by spreading the addition of (part of the total amount of) the ingredients over the reaction vessels.

The metal-doped pentasil-type zeolite resulting from the process according to the invention has a SiO₂/Al₂O₃ ratio of 25-90. Typical examples of pentasil-type zeolites are ZSM-type zeolites, such as ZSM-5, ZSM-11, ZSM-12, ZSM-22, ZSM-23, ZSM-35, zeolite beta, or zeolite boron beta. The metal-doped pentasil-type zeolite contains 0.1-10 wt% of dopant, more preferably 0.1-3 wt%, and most preferably 0.5-2.5 wt%, calculated as oxide and based on the dry weight of metal-doped pentasil-type zeolite.

If so desired, the resulting metal-doped pentasil-type zeolite may be calcined and optionally ion-exchanged.

The so-formed metal-doped pentasil-type zeolite can be used in or as a catalyst composition or catalyst additive composition for, e.g. hydrogenation, dehydrogenation, catalytic cracking (FCC), alkylation reactions, hydrodesulfurisation, hydrodenitrogenation, and hydrodemetallisation.

### EXAMPLES

### Example 1

A silica-alumina gel (338.5 g) doped with 5 wt% RE, calculated as oxide, was added to a 30-litre stirred vessel containing 2,666 g water. Next, 2,015 g of a 98 wt% H₂SO₄ solution was added, followed by the slow addition (in 15 minutes) of 2,069 g of water glass. Next, 488.9 g of seeds slurry (prepared by mixing 51.9 gram ZSM-5 ex-AlsiPenta with 437 gram water) were added. The pH of the resulting slurry was adjusted with caustic to 10.5.

The temperature of the resulting slurry was raised to 99°C in one hour and maintained thus for another hour. The temperature was then raised to 170°C and maintained thus for 12 hours. The resulting product was dried overnight at 120°c.

The powder X-ray diffraction pattern of the product indicated the formation of ZSM-5 without any traces of separate REO peaks. Hence, the rare earth metal was not precipitated as a separate phase.

Chemical analysis showed that the concentration of RE (calculated as oxide) in the ZSM-5 was 0.9 wt%.

### Example 2

Example 1 was repeated, except for the addition of caustic to adjust the pH. Again, powder X-ray diffraction indicated the formation of ZSM-5 without any traces of separate REO peaks. Chemical analysis showed that the concentration of RE (calculated as oxide) in the ZSM-5 was 0.9 wt%.

## Claims

1. Process for the preparation of a metal-doped pentasil-type zeolite, which process comprises the steps of:
a) preparing an aqueous precursor mixture comprising a silicon source and an aluminium source, at least one of these sources being doped with a rare earth metal dopant or a transition metal dopant of Groups Vb-Vlllb, lb, or lib of the Periodic System, and wherein the aqueous precursor mixture preferably comprises a seeding material,
b) thermally treating the precursor mixture to form a metal-doped pentasil-type zeolite,
wherein the pentasil-type zeolite is ZSM-5 or ZSM-11,
wherein the metal-doped pentasil-type zeolite has a SiO₂/Al₂O₃ ratio of 25-90 and contains 0.1-10 wt%, of dopant calculated as oxide and based on the dry weight of metal-doped pentasil-type zeolite,
wherein the metal dopant has been incorporated into the silicon and/or the aluminium source before the above process is performed, by preparing the silicon and/or the aluminium source in the presence of the desired dopant or by impregnation or ion exchange of the silicon and/or the aluminium source with the metal dopant, whereby the metal compound is in the silicon or the aluminium source as a metal-doped silicon or aluminium source and not freely present in the aqueous precursor mixture,
wherein the metal-doped silicon source is selected from the group consisting of metal-doped sodium (meta)silicate or water glass, metal-doped stabilised silica sols, metal-doped silica gels, metal-doped polysilicic acid, metal-doped tetra ethylortho silicate, metal-doped precipitated silicas, metal-doped SiAl cogels, and mixtures thereof and
wherein the metal-doped aluminium source is selected from the group consisting of metal-doped aluminium trihydrate (AI(OH)3), metal-doped thermally treated aluminium trihydrate, metal-doped (pseudo)boehmite, metal-doped aluminium chlorohydrol, metal-doped aluminium nitrohydrol, metal-doped SiAl cogels, and mixtures thereof.

2. The process of claim 1 wherein the aluminium source and/or the silicon source is doped with a metal selected from the group consisting of Ce, La, Mn, Fe, Cu, Ni, Zn, Mo, W, V, Pt, and Pd.

3. The process according to any one of the preceding claims wherein a shaping step is performed between steps a) and b).

4. The process according to claims 1, wherein aqueous precursor mixture comprises seeding material, preferably 1-10 wt% of seeding material, based on the total solids content

5. The process according to claim 1 wherein the thermal treatment step b) is performed at temperatures ranging from 130 to 200° C, preferably 150-180° C, for 3-60 hrs to form the metal-doped pentasil-zeolite by crystallization.

6. The process according claim 1 wherein the seeding materials include faujasite-type seeds (zeolite X or Y), pentasil-type seeds (e.g. ZSM-5 seeds or zeolite beta seeds), amorphous seeds (e.g. amorphous Si-Al cogel), clays (e.g. bentonite, kaolin), milled zeolites with crystallites too small to be detected by X-ray diffraction techniques, and sols or gels containing an organic directing template like tetrapropyl ammonium hydroxide (TPAOH) or tetrapropyl ammonium bromide (TPABr).

7. The process according to claim 6 wherein the seeding materials is a template-containing sol being a Si-AI sol containing 0.1-10 wt% of tetrapropyl ammonium bromide.

## Patentansprüche

1. Verfahren für die Herstellung eines metalldotierten Zeolithen vom Pentasiltyp, wobei das Verfahren die Schritte umfasst:
a) Herstellen einer wässrigen Vorläufermischung, umfassend eine Siliciumquelle und eine Aluminiumquelle, wobei mindestens eine dieser Quellen mit einem Seltenerdmetalldotiermittel oder einem Übergangsmetalldotiermittel der Gruppen Vb-Vlllb, lb, oder IIb des Periodensystems dotiert ist, und wobei die wässrige Vorläufermischung vorzugsweise ein Animpfungsmaterial umfasst,
b) thermisches Behandeln der Vorläufermischung, um einen metalldotierten Zeolithen vom Pentasiltyp auszubilden,
wobei der Zeolith vom Pentasiltyp ZSM-5 oder ZSM-11 ist,
wobei der metalldotierte Zeolith vom Pentasiltyp ein SiO₂/Al₂O₃-Verhältnis von 25-90 aufweist und zu 0,1-10 Gew.-% ein Dotiermittel enthält, das als Oxid und basierend auf dem Trockengewicht des metalldotierten Zeolithen vom Pentasiltyp berechnet ist, wobei das Metalldotiermittel in das Silicium und/oder die Aluminiumquelle eingearbeitet wurde, bevor das obige Verfahren durchgeführt wird, durch Herstellen des Siliciums und/oder der Aluminiumquelle in der Gegenwart des gewünschten Dotiermittels oder durch Imprägnieren oder Ionenaustausch des Siliciums und/oder der Aluminiumquelle mit dem Metalldotiermittel, wodurch die Metallverbindung in dem Silicium oder der Aluminiumquelle als eine metalldotierte Silicium-oder Aluminiumquelle vorliegt und nicht frei in der wässrigen Vorläufermischung vorhanden ist,
wobei die metalldotierte Siliciumquelle ausgewählt ist aus der Gruppe, bestehend aus metalldotiertem Natrium(meta)silicat oder Wasserglas, metalldotierten stabilisierten Silicasolen, metalldotierten Silicagelen, metalldotierte Polykieselsäure, metalldotiertem Tetraethylorthosilicat, metalldotierten Fällungskieselsäuren, metalldotierten SiAl-Cogelen und Mischungen davon und
wobei die metalldotierte Aluminiumquelle aus der Gruppe ausgewählt ist, bestehend aus metalldotiertem Aluminiumtrihydrat (Al(OH)3), metalldotiertem thermisch behandelten Aluminiumtrihydrat, metalldotiertem (pseudo) Böhmit, metalldotiertem Aluminiumchlorhydrol, metalldotiertem Aluminiumnitrohydrol, metalldotierten SiAl-Cogelen und Mischungen davon.

2. Verfahren nach Anspruch 1, wobei die Aluminiumquelle und/oder die Siliziumquelle mit einem Metall dotiert ist, das aus der Gruppe ausgewählt ist, bestehend aus Ce, La, Mn, Fe, Cu, Ni, Zn, Mo, W, V, Pt und Pd.

3. Verfahren nach einem der vorstehenden Ansprüche, wobei ein Formgebungsschritt zwischen den Schritten a) und b) durchgeführt wird.

4. Verfahren nach Anspruch 1, wobei wässrige Vorläufermischung Animpfungsmaterial, vorzugsweise zu 1-10 Gew.-% ein Animpfungsmaterial, bezogen auf den Gesamtfeststoffgehalt, umfasst

5. Verfahren nach Anspruch 1, wobei der thermische Behandlungsschritt b) bei Temperaturen in dem Bereich von 130 bis 200 °C, vorzugsweise 150-180 °C, für 3-60 Stunden durchgeführt wird, um den metalldotierten Pentasil-Zeolithen durch Kristallisation auszubilden.

6. Verfahren nach Anspruch 1, wobei die Animpfungsmaterialien Impfkristalle vom Faujasittyp (Zeolith X oder Y), Impfkristalle vom Pentasiltyp (z. B. ZSM-5 Impfkristalle oder Zeolith-Beta-Impfkristalle), amorphe Impfkristalle (z. B. amorphes Si-Al-Cogel), Bleicherden (z. B. Bentonit, Kaolin), gemahlene Zeolithe mit Kristalliten, die zu klein sind, um durch Röntgenbeugungsmethoden erkannt zu werden, und Sole oder Gele, die ein organisches dirigierendes Template wie Tetrapropylammoniumhydroxid (TPAOH) oder Tetrapropylammoniumbromid (TPABr) enthalten, einschließen.

7. Verfahren nach Anspruch 6, wobei die Animpfungsmaterialien ein template-haltiges Sol ist, das ein Si-Al-Sol ist, das zu 0,1-10 Gew.-% ein Tetrapropylammoniumbromid enthält.

## Revendications

1. Procédé de préparation d'une zéolite de type pentasil à dopage métallique, lequel procédé comprend les étapes consistant à :
a) préparer un mélange précurseur aqueux comprenant une source de silicium et une source d'aluminium, au moins une de ces sources étant dopée avec un dopant métal des terres rares ou un dopant métal de transition des Groupes Vb-Vlllb, lb ou IIb du système périodique, et dans lequel le mélange précurseur aqueux comprend de préférence un matériau d'ensemencement,
b) traiter thermiquement le mélange précurseur pour former une zéolite de type pentasil à dopage métallique,
dans lequel la zéolite de type pentasil est ZSM-5 ou ZSM-11,
dans lequel la zéolite de type pentasil à dopage métallique a un rapport SiO₂/Al₂O₃ de 25 à 90 et contient 0,1 à 10 % en poids, de dopant calculé en tant qu'oxyde et sur la base du poids sec de zéolite de type pentasil à dopage métallique, dans lequel le dopant métallique a été incorporé dans la source de silicium et/ou d'aluminium avant que le procédé ci-dessus ne soit mis en oeuvre, en préparant la source de silicium et/ou d'aluminium en présence du dopant souhaité ou par imprégnation ou échange ionique de la source de silicium et/ou d'aluminium avec le dopant métallique, moyennant quoi le composé métallique est dans la source de silicium ou celle d'aluminium en tant que source de silicium ou d'aluminium à dopage métallique et non librement présent dans le mélange précurseur aqueux,
dans lequel la source de silicium à dopage métallique est choisie dans le groupe constitué de (méta)silicate de sodium ou verre soluble à dopage métallique, sols de silice stabilisés à dopage métallique, gels de silice à dopage métallique, acide polysilicique à dopage métallique, tétraéthylorthosilicate à dopage métallique, silices précipitées à dopage métallique, cogels SiAl à dopage métallique, et mélanges de ceux-ci et
dans lequel la source d'aluminium à dopage métallique est choisie dans le groupe constitué de trihydrate d'aluminium (AI(OH)3) à dopage métallique, trihydrate d'aluminium thermiquement traité à dopage métallique, (pseudo)boehmite à dopage métallique, chlorohydrol d'aluminium à dopage métallique, nitrohydrol d'aluminium à dopage métallique, cogels SiAl à dopage métallique, et mélanges de ceux-ci.

2. Procédé selon la revendication 1 dans lequel la source d'aluminium et/ou la source de silicium sont dopées avec un métal choisi dans le groupe constitué de Ce, La, Mn, Fe, Cu, Ni, Zn, Mo, W, V, Pt et Pd.

3. Procédé selon l'une quelconque des revendications précédentes dans lequel une étape de façonnage est mise en oeuvre entre les étapes a) et b).

4. Procédé selon la revendication 1, dans lequel le mélange précurseur aqueux comprend un matériau d'ensemencement, de préférence 1 à 10 % en poids de matériau d'ensemencement, sur la base de la teneur totale en solides

5. Procédé selon la revendication 1 dans lequel l'étape b) de traitement thermique est mise en oeuvre à des températures allant de 130 à 200 °C, de préférence 150 à 180 °C, pendant 3 à 60 h pour former la zéolite de pentasil à dopage métallique par cristallisation.

6. Procédé selon la revendication 1 dans lequel les matériaux d'ensemencement incluent des ensemencements de type faujasite (zéolite X ou Y), des ensemencements de type pentasil (par exemple, ensemencements ZSM-5 ou ensemencements zéolite bêta), des ensemencements amorphes (par exemple cogel Si-Al amorphe), des argiles (par exemple bentonite, kaolin), des zéolites broyées avec des cristallites trop petites pour être détectées par des techniques de diffraction des rayons X, et des sols ou gels contenant un modèle structurant organique de type hydroxyde de tétrapropyl-ammonium (TPAOH) ou bromure de tétrapropyl-ammonium (TPABr).

7. Procédé selon la revendication 6 dans lequel le matériau d'ensemencement est un sol contenant un modèle qui est un sol Si-Al contenant 0,1 à 10 % en poids de bromure de tétrapropyl-ammonium.
